# EUROPEAN PATENT SPECIFICATION

(11) **EP 4 462 492 B1**
(45) Date of publication and mention of the grant of the patent: **04.11.2026**
(21) Application number: 24173772.5
(22) Date of filing: 02.05.2024
(51) Int. Cl.: H01M 4/04, H01M 4/13, H01M 4/36, H01M 4/62, H01M 10/0525, H01M 4/1391, H01M 4/139, H01M 4/02, B32B 5/26, B32B 5/12, B32B 7/12, B32B 27/32

(54) **AN ELECTRODE PLATE, A MANUFACTURING METHOD THEREFOR AND A BATTERY**
ELEKTRODENPLATTE, HERSTELLUNGSVERFAHREN DAFÜR UND BATTERIE
PLAQUE D'ÉLECTRODE, SON PROCÉDÉ DE FABRICATION ET BATTERIE

(30) Priority: 05.05.2023 CN 202310498014
(43) Date of publication of application: 13.11.2024
(73) Proprietor: Jiangsu Zenergy Battery Technologies Group Co., Ltd., Suzhou City, Jiangsu 215500 (CN)
(72) Inventor: ZHANG, Xintian, Changshu Suzhou City, Jiangsu, 215500 (CN); LU, Juntai, Changshu Suzhou City, Jiangsu, 215500 (CN); WEI, Jianliang, Changshu Suzhou City, Jiangsu, 215500 (CN)
(74) Representative: Studio Torta S.p.A.

(56) References cited:
- WO-A1-2023/177244
- CN-A- 115 579 458
- US-A1- 2022 238 858

## Description

### Technical Field

The present invention relates to the field of battery technology, and in particular, to an electrode plate, a manufacturing method therefor, and a battery.

### Background

The degree of fiberization of an active material on an electrode plate is a key factor in dry electrode technology. Taking PTFE (polytetrafluoroethylene) as an embodiment, there are currently many methods to increase the degree of fiberization of PTFE, including but not limited to high-speed stirring, step-by-step feeding, airflow grinding, baking, self-supporting, etc. However, the current effects achieved by these methods are not ideal, and some methods may even cause side effects to each other when used in combination. For example, baking will make fiberization be easily occurred in the rolling film forming process, but it will also destroy the structure of some PTFE that is already subjected to fiberization or has a fiberization tendency. Another embodiment is that the degree of fiberization in the longitudinal direction is better, but the degree of fiberization in the transverse direction is poor. Therefore, the fiberization effects of the current processes are poor, the strength of the electrode plates is poor, and problems such as cracking are prone to occur.

CN115579458A belongs to the technical field of battery material preparation, and mainly relates to a method for preparing a lithium ion battery electrode membrane by using a dry process. Modified ultra-high molecular weight polytetrafluoroethylene (PTFE) is used as a binder, firstly, the binder is uniformly mixed with an active material and a conductive agent at low temperature and low speed, after heating and heat preservation, mixed powder is subjected to high-speed shearing and stirring, and fiberized electrode powder is obtained. And the fiberized mixed powder is accurately metered and conveyed to continuous rolling equipment to be subjected to hot-pressing film forming, the mechanical precision, temperature and pressure of a hot-pressing roller are controlled, and the obtained electrode film is uniform in thickness and high in strength and has toughness. According to the method for preparing the highly-fiberized electrode membrane by the dry method, the particle size and the molecular weight of the PTFE binder are modified and adjusted, the mechanical property of the PTFE binder is optimized, and the fiberizing mode, the fiberizing speed, the fiberizing temperature, the fiberizing time and the precision of a hot pressing roller of the binder are regulated and controlled, so that the electrode membrane with good quality is produced; the compaction density and the energy density of the battery are favorably improved, and the application potential in the lithium ion battery industry is huge.

US20220238858A1 relates to methods for manufacturing intermittently coated dry electrodes for energy storage devices and energy storage devices including the intermittently coated dry electrodes are disclosed. In one embodiment, the method includes providing a metal layer and providing an electrochemically active free-standing film formed of a dry active material. The method also includes combining the electrochemically active free-standing film and the metal layer to form a combined layer. The method further includes removing a portion of the electrochemically active free-standing film from the combined layer so that the electrochemically active free-standing film is intermittently formed on the metal layer in a longitudinal direction of the metal layer.

WO2023177244A1 relates to an electrode film for manufacturing a dry electrode of a secondary battery, a dry electrode including the same, and a method of manufacturing the same. An electrode film according to an aspect of the invention includes unit electrode films stacked in two or more layers, the unit electrode films including a fibrillated binder and an active material, in which machine directions (MD) of unit electrode films in contact with each other among the two or more layers of unit electrode films are antiparallel to each other.

In view of this, the present invention is filed.

### Summary

The purpose of the present invention is to provide an electrode plate, a manufacturing method therefor, and a battery. The manufacturing method can improve the strength of the electrode plate and alleviate the problem of easy cracking.

The present invention is implemented as follows:

According to claim 1 on file, the present invention provides a manufacturing method for an electrode plate, comprising:
Obtaining at least two active material films 100;
Stacking the at least two active material films 100, wherein the fiberization directions of the two adjacent active material films 100 forming an included angle, and applying a conductive glue 200 between the two Adjacent active material films 100;
Rolling the stacked at least two active material films 100 to obtain an electrode film; and
Combining the electrode film and a current collector to obtain the electrode plate.

The fiberization directions of the two adjacent active material films 100 are perpendicular to each other.

The step of obtaining at least two active material films 100 comprises:
Mixing and stirring an active material, a conductive agent, polytetrafluoroethylene and an additive to obtain mixed powder; and
Subjecting the mixed powder to shaping in a roller press to obtain the active material film 100.

Placing two adjacent active material films 100 to a fiberization direction, the fiberization directions of the two adjacent active material films 100 respectively being consistent with the length and width directions of the active material films 100 itself

In an optional embodiment, the roller surface temperature of the roller press is 40-240 °C.

In an optional embodiment, before rolling the stacked at least two active material films, the thickness of the conductive glue is 1-20 µm.

In an optional embodiment, in the step of rolling the stacked at least two active material films, the roller surface temperature is 100-130 °C, and the rolling speed is 1-1.5 m/min.

In an optional embodiment, before the step of combining the electrode film with a current collector, the manufacturing method for an electrode plate also comprises:
Subjecting the electrode film which obtained by rolling to thinning treatment.

In an optional embodiment, the thinning treatment is realized by hot pressing.

In an optional embodiment, before the thinning treatment, the thickness of the electrode film is 150-165 µm; the thickness of the electrode film used for an anode plate is 65-75 µm after the thinning treatment, and the thickness of the electrode film used for a cathode plate is 50-60 µm after the thinning treatment.

In an optional embodiment, in the step of combining the electrode film and the current collector, a flat plate hot press is used for combination. The surface temperature of the flat plate hot press is 185 °C, and the pressure is 2-6.7 MPa.

According to independent claim 9, the present invention provides an electrode plate, which is manufactured by the manufacturing method for an electrode plate in any one of the preceding embodiments.

In a third aspect, the present invention provides a battery, comprising the electrode plate of claim 9.

The present invention has the following beneficial effects:
The manufacturing method for an electrode plate of the present invention comprises obtaining at least two active material films. The manufacturing method provided by the present invention improves the combination property of the active material films by applying the conductive glue between two adjacent active material films, thereby increasing the strength of the electrode film and making it less likely crack. Further, the conductive glue also reduces the film surface resistance, making the electrode plate better conductive. By making the fiberization directions of the two adjacent active material films form an included angle, a fiberization network of the electrode film can be constructed, which effectively increases the mechanical strength of the electrode plate and improves the problem of low lateral strength in a single rolling process and easy cracking of the electrode plate.

### Brief Description of the Drawings

In order to more clearly illustrate the technical solutions of the embodiments of the present invention, the drawings required to be used in the embodiments will be briefly introduced below. It should be understood that the following drawings only show some embodiments of the present invention and therefore should not be regarded as a limitation of the scope.
Fig. 1 is a flow chart of a manufacturing method for an electrode plate in an embodiment of the present invention;
Fig. 2 is a schematic diagram of stacking two active material films and a conductive glue therebetween in an embodiment of the present invention.

Explanation of main component symbols: 100 - active material film; 200 - conductive glue.

### Detailed Description of the Embodiments

In the existing dry electrode manufacturing process, one-time rolling is used to achieve fiberization, and after the one-time rolling, the degree of fiberization in the longitudinal direction is good, but the fiberization in the transverse direction is poor. Although a method comprising multiple folding and rolling solves this problem to a certain extent, it also causes the electrode plate to be too dense and difficult to thin. Further, this method is inefficient, cumbersome to operate, and difficult to control quality. In view of the current problems of dry electrodes having poor transverse or longitudinal strength due to insufficient fiberization in all directions and being difficulty in thinning after multiple folding and rolling, the present invention provides a manufacturing method for a dry electrode plate which has certain strength in both the longitudinal and transverse directions, and the manufacturing method is easy to operate and achieve mass production, can reduce the surface resistance, and can obtain a suitable thickness after thinning. In addition, the present invention also provides an electrode plate produced by the manufacturing method and a battery comprising the electrode plate.

In order to make the purpose, technical solutions and advantages of the embodiments of the present invention clearer, the technical solutions in the embodiments of the present invention will be clearly and completely described below. If specific conditions are not specified in the embodiments, the conditions should be carried out according to conventional conditions or conditions recommended by the manufacturer. If the manufacturers of the reagents or instruments used are not indicated, they are all conventional products that can be purchased commercially.

The features and properties of the present invention will be described in further detail below in conjunction with embodiments.

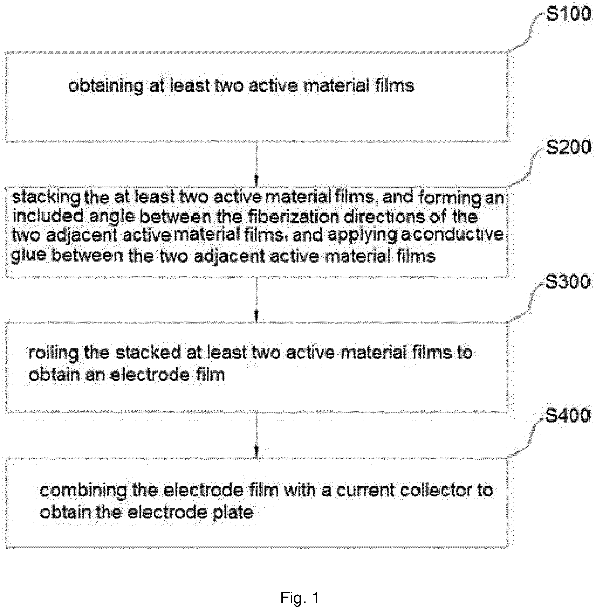

Fig. 1 is a flow chart of a manufacturing method for an electrode plate in an embodiment of the present invention. As shown in Fig. 1, the manufacturing method for an electrode plate provided by the embodiment of the present invention comprises:
Step S100: obtaining at least two active material films.

In the embodiments of the present invention, the active material film is used for subsequent production of an electrode film. Specifically, the step S100 may comprise the following steps:
Step S110, mixing and stirring an active material, a conductive agent, polytetrafluoroethylene and additives to obtain mixed powder;
Step S120: subjecting the mixed powder to milling and shaping by means of open-rolling same in a roller press to obtain an active material film.

Optionally, the method for manufacturing the electrode plate provided in the embodiment of the present invention can be used to manufacture either a cathode plate or an anode plate. When manufacturing a cathode plate, the active material should be a cathode active material (such as NCM, LFP, LCO, and LMO); correspondingly, when manufacturing an anode plate, the active material should be an anode active material.

Optionally, the conductive agent includes but is not limited to SP, CSX, CNT, etc.

Optionally, in step S110, the active material, the conductive agent, polytetrafluoroethylene (PTFE) and the additive can be granulated by high-speed stirring in a stirring tank to obtain mixed powder. The specific steps may include: putting the active material and the conductive agent into the stirring tank, stirring at a stirring rate of 3200 r/min for 10-15 min; adding PTFE and additive powder, and stirring at a stirring rate of 4000 r/min for 5 min to obtain mixed powder.

Optionally, in the step S120, the roller surface temperature of the roller press during the milling and shaping process of the mixed powder is 40-240 °C. For example, the roller surface temperature is any value of 40 °C, 60 °C, 80 °C, 100 °C, 120 °C, 140 °C, 160 °C, 180 °C, 200 °C, 220 °C and 240 °C or a value between any two values. The roller press can be a vertical roller press.

Optionally, the thickness of the produced active material film is 80-125 µm.

In step S200, at least two active material films are stacked, and the fiberization directions of the two adjacent active material films form an included angle, the conductive glue is applied between two adjacent active material films.

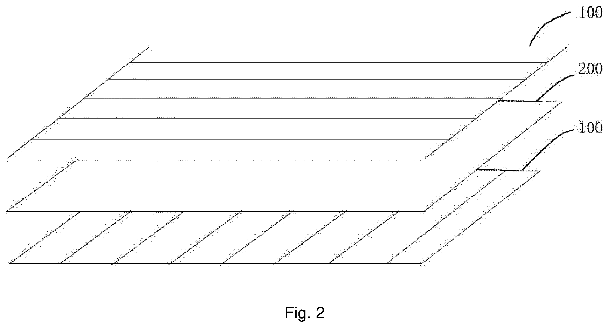

Fig. 2 is a schematic diagram of stacking two active material films 100 and a conductive glue 200 therebetween in the embodiment of the present invention. As shown in FIG. 2, the extending direction of the stripes on the active material film 100 is the fiberization direction. Optionally, two active material films 100 can be stacked, or three or more active material films 100 can be stacked as needed.

Optionally, the fiberization directions of the two adjacent active material films 100 are perpendicular to each other, so that the degree of fiberization in all directions of the manufactured electrode plate is more uniform and the anisotropy is reduced.

After the active material films 100 are stacked, the sizes of the active material films 100 can be made consistent by cutting. For example, in an optional embodiment, the active material film 100 can be cut into a length of 80 cm and a width of 40 cm.

Optionally, before rolling the stacked at least two active material films 100, the thickness of the conductive glue 200 between the two adjacent active material films 100 is 1-20 µm; optionally, the thickness of the conductive glue 200 is 5-15 µm; further, the thickness of the conductive glue 200 is 8-10 µm. The conductive glue 200 can not only ensure the bonding strength between the active material films 100, but also ensure that the subsequently obtained electrode film has better conductivity. Too much conductive glue 200 may lead to a decrease in the proportion of the active materials in the electrode film, thereby affecting the properties; and too little conductive glue 200 may lead to a decrease in the conductivity, strength and other parameters of the electrode film.

The conductive glue 200 includes, but is not limited to, epoxy resin conductive glue, acrylic resin conductive glue, polyimide resin conductive glue, phenolic resin conductive glue, etc.

In step S300: the stacked at least two active material films are rolled to obtain an electrode film.

Optionally, during the rolling process of the stacked active material films 100, the rolling pressure is 9t, and the roller surface temperature is 40-240 °C; further, the roller surface temperature can be optionally 100-130 °C. The roller speed can be selected from 1-1.5 m/min, such as 1 m/min, 1.1 m/min, 1.2 m/min, 1.3 m/min, 1.4 m/min or 1.5 m/min. The active material films 100 can be combined together by rolling, and the purpose of drying the conductive glue 200 can be achieved at the same time. The thickness of the combined film after this rolling can be selected from 150-165 µm.

Optionally, step S300 also comprises thinning the electrode film obtained by rolling. Specifically, the combined film obtained above can still be thinned by hot pressing. The thickness of the combined film before thinning is 150-165 µm. The thickness of the electrode film obtained after thinning can be selected according to needs. For example, the thickness of the electrode film used for the anode plate after thinning is 65-75 µm, and the thickness of the electrode film used for the cathode plate after thinning is 50-60 µm. It should be understood that the final thickness of the thinning process can also be other values outside the above range according to needs. For example, the electrode film applied to the anode plate can be thinned to a minimum of 46 µm. In some optional embodiments, the thinning treatment may not be performed, and the combined film after rolling may be used as the electrode film.

Thinning can be achieved by passing the combined film over a roll. In an optional embodiment, the rolling pressure is 11.5 t, and the roll surface temperature is 65 °C (for manufacturing the cathode film) or 115 °C (for making the anode film).

In step S400, the electrode film and a current collector are combined to obtain an electrode plate.

In an optional embodiment, a flat plate hot press is used for combination; optionally, the surface temperature of the flat plate hot press is 185 °C, the pressure is 2-6.7 MPa, and the hot pressing time is not less than 2.5 s. The current collector can use hot-melt gravure foil (such as copper foil).

The battery provided in the embodiment of the present invention comprises the electrode plate produced by the manufacturing method provided by the present invention.

In the electrode plate produced by the manufacturing method provided in the embodiment of the present invention, the electrode film has a fibrous network structure, so it has better tensile strength in the transverse direction and the longitudinal direction (consistent with the two fiberization directions respectively). The beneficial effects of the embodiments of the present invention are introduced below in combination with different embodiments, comparative embodiments and tests.

### Embodiment 1

The manufacturing method of this embodiment was used to manufacture a cathode plate, comprising:
1) Putting a positive active material NCM and a conductive agent into a stirring tank, stirring at 3200 r/min for 10-15 min, then adding PTFE and additive powder, and mixing evenly at 4000 r/min for 5 min to obtain mixed powder;
2) Rolling the mixed powder by means of a roller press to obtain active material film, placing the two active material films vertically in the direction of fiberization, and cutting same to the same size, 80 cm long and 40 cm wide, wherein the thickness of each active material film is 110-125 µm, and the fiberization directions of the two active material films are consistent with the length and width directions, respectively;
3) Coating an epoxy resin conductive glue with the thickness being 10 µm between the two active material films, laminating the two active material films, and passing same through a hot roller with a surface temperature of 115 °C at a speed of 1.4 m/min for combination, wherein the thickness after combination is 150-165 µm;
4) Thinning the combined film again by hot pressing to obtain a cathode film with a thickness of 50-60 µm; and
5) Combining the electrode film and a current collector by means of hot pressing on a flat plate hot press with a flat plate temperature of 185 °C, a pressure of 3.5 MPa, and a hot pressing time of 3 s.

### Embodiment 2

The manufacturing method of this embodiment was used to manufacture an anode plate, comprising:
1) Putting a negative active material (graphite) and a conductive agent into a stirring tank, stirring at 3200 r/min for 10-15 min, then adding PTFE and additive powder, and mixing evenly at 4000 r/min for 5 min to obtain mixed powder;
2) Rolling the mixed powder by means of a roller press to obtain active material film, placing the two active material films vertically in the direction of fiberization, and cutting same to the same size, 80 cm long and 40 cm wide, wherein the thickness of each active material film is 80-100 µm, and the fiberization directions of the two active material films are consistent with the length and width directions, respectively;
3) Coating an epoxy resin conductive glue with the thickness being 10 µm between the two active material films, laminating the two active material films, and passing same through a hot roller with a surface temperature of 115 °C at a speed of 1.4 m/min for combination, wherein the thickness after combination is 140-160 µm;
4) Thinning the combined film again by hot pressing to obtain an anode film with a thickness of 65-75 µm; and
5) Combining the electrode film and a current collector by means of hot pressing on a flat plate hot press with a flat plate temperature of 185 °C, a pressure of 3.5 MPa, and a hot pressing time of 3 s.

### Comparative embodiment 1

In this comparative embodiment, a cathode plate was produced. The method comprises:
1) Putting a positive active material NCM and a conductive agent into a stirring tank, stirring at 3200 r/min for 10-15 min, then adding PTFE and additive powder, and mixing evenly at 4000 r/min for 5 min to obtain mixed powder;
2) Rolling the mixed powder by means of a roller press to obtain active material film, 80 cm long, 40 cm wide, and 110-125 µm thick, wherein the fiberization direction is consistent with the length direction;
3) Thinning by hot pressing to obtain a cathode film with a thickness of 50-60 µm; and
4) Combining the electrode film and a current collector by means of a flat plate hot press with a flat plate temperature of 185 °C, a pressure of 3.5 MPa, and a hot pressing time of 3 s.

### Comparative embodiment 2

In this comparative embodiment, an anode plate was produced. The method comprises:
1) Putting a negative active material (graphite) and a conductive agent into a stirring tank, stirring at 3200 r/min for 10-15 min, then adding PTFE and additive powder, and mixing evenly at 4000 r/min for 5 min to obtain mixed powder;
2) Rolling the mixed powder by means of a roller press to obtain active material film, 80 cm long, 40 cm wide, and 80-100 µm thick, wherein the fiberization direction is consistent with the length direction;
3) Thinning by hot pressing to obtain an anode film with a thickness of 65-75 µm; and
4) Combining the electrode film and a current collector by means of a flat plate hot press with a flat plate temperature of 185 °C, a pressure of 3.5 MPa, and a hot pressing time of 3 s.

Electrode films were produced in the manner of the above-mentioned Embodiments 1 and 2 and Comparative embodiments 1 and 2, and the tensile properties of the electrode films were tested. The tensile strength of the electrode films of each embodiment and comparative embodiment was tested eight times each in the length direction and width direction. The test results were shown in the table below.

| Group | Test direction | Tensile strength (unit N/m²) | | | | | | | |
|---|---|---|---|---|---|---|---|---|---|
| Embodiment 1 | Length direction | 17.52 | 17.21 | 17.99 | 19.47 | 18.95 | 19.36 | 18.25 | 17.18 |
| | Width direction | 11.26 | 9.58 | 11.53 | 10.11 | 12.05 | 11.54 | 11.17 | 10.31 |
| Embodiment 2 | Length direction | 16.33 | 16.89 | 16.25 | 17.83 | 15.69 | 17.59 | 16.34 | 15.86 |
| | Width direction | 11.54 | 12.26 | 11.87 | 10.81 | 12.53 | 11.29 | 11.94 | 11.47 |
| Comparative embodiment 1 | Length direction | 16.32 | 15.87 | 18.11 | 16.75 | 17.22 | 18.94 | 15.78 | 17.45 |
| | Width direction | 4.21 | 4.85 | 4.33 | 4.56 | 4.47 | 5.15 | 4.43 | 5.37 |
| Comparative embodiment 2 | Length direction | 14.53 | 15.62 | 14.89 | 13.65 | 16.23 | 15.57 | 13.87 | 14.09 |
| | Width direction | 6.72 | 6.83 | 7.05 | 5.84 | 5.12 | 6.09 | 6.65 | 6.54 |

As could be determined from the table above, the average tensile strength (18.24 N/m²) of the cathode film in the length direction of Embodiment 1 was slightly better than the average tensile strength of the cathode film in the length direction of Comparative embodiment 1 (17.06 N/m²); and the average tensile strength of the cathode film in the width direction of Embodiment 1 (10.94 N/m²) was significantly better than the average tensile strength of the cathode film in the width direction of Comparative embodiment 1 (4.67 N/m²) . The average tensile strength in the length direction of the anode film of Embodiment 2 (16.6 N/m²) was slightly better than the average tensile strength of the anode film in the length direction of Comparative embodiment 2 (14.81 N/m²); and the average tensile strength in the width direction of the anode film of Embodiment 2 (11.71 N/m²) was significantly better than the average tensile strength in the width direction of the anode film of Comparative embodiment 2 (6.36 N/m²). In Embodiments 1 and 2 of the present invention, two active material films were stacked and combined, and the fiberization directions of the two active material films are perpendicular to each other to form a fibrous network structure. Compared with the cases where two (or more) active material films were not stacked of Comparative embodiments 1 and 2, the tensile strength was obviously optimized.

To sum up, the manufacturing method for an electrode plate of the present invention comprised obtaining at least two active material films; stacking the at least two active material films, and applying a conductive glue between the two adjacent active material films, the fiberization directions of the two adjacent active material films were perpendicular to each other or form an included angle therebetween; rolling the stacked at least two active material films to obtain an electrode film; and combining the electrode film and a current collector to obtain the electrode plate. The manufacturing method provided by the present invention improved the combination property of the active material films by applying the conductive glue between two adjacent active material films, thereby increasing the strength of the electrode film and making it less likely crack. Further, the conductive glue also reduced the film surface resistance, making the electrode plate better conductive. By making the fiberization directions of the two adjacent active material films form an included angle, a fiberization network of the electrode film could be constructed, which effectively increases the mechanical strength of the electrode plate and improved the problem of low lateral strength in a single rolling process and easy cracking of the electrode plate.

## Claims

1. A manufacturing method for an electrode plate, comprising:
obtaining at least two active material films (100);
stacking the at least two active material films (100), forming an included angle between the fiberization directions of the two adjacent active material films (100), and applying a conductive glue (200) between the two adjacent active material films (100);
rolling the stacked at least two active material films (100) to obtain an electrode film; and
combining the electrode film and a current collector to obtain the electrode plate;
the fiberization directions of the two adjacent active material films (100) are perpendicular to each other;
the step of obtaining at least two active material films (100) comprises:
mixing and stirring an active material, a conductive agent, polytetrafluoroethylene and an additive to obtain mixed powder; and
subjecting the mixed powder to shaping in a roller press to obtain the active material film (100);
placing two adjacent active material films (100) to a fiberization direction, the fiberization directions of the two adjacent active material films (100) respectively being consistent with the length and width directions of the active material films (100) itself.

2. The manufacturing method for an electrode plate according to claim 1, wherein the roller surface temperature of the roller press is 40-240 °C.

3. The manufacturing method for an electrode plate according to claim 1, wherein before rolling the stacked at least two active material films (100), the thickness of the conductive glue (200) is 1-20 µm.

4. The manufacturing method for an electrode plate according to claim 1, wherein in the step of rolling the stacked at least two active material films (100), the roller surface temperature is 100-130 °C, and the roller speed is 1-1.5 m/min.

5. The manufacturing method for an electrode plate according to claim 1, wherein before the step of combining the electrode film and the current collector, the manufacturing method for an electrode plate further comprises:
subjecting the electrode film obtained by rolling to thinning treatment.

6. The manufacturing method for an electrode plate according to claim 5, wherein the thinning treatment is implemented by hot pressing.

7. The manufacturing method for an electrode plate according to claim 5, wherein before the thinning treatment, the thickness of the electrode film is 150-165 µm; the thickness of the electrode film used for an anode plate is 65-75 µm after the thinning treatment, and the thickness of the electrode film used for a cathode plate after the thinning treatment is 50-60 µm.

8. The manufacturing method for an electrode plate according to claim 1, wherein in the step of combining the electrode film and the current collector, a flat plate hot press is used for combination, and the surface temperature of the flat plate hot press is 185 °C, and the pressure is 2-6.7 MPa.

9. An electrode plate, wherein, the electrode plate produced by the manufacturing method for an electrode plate according to any one of claims 1-8.

10. A battery, wherein, the battery comprises the electrode plate according to claim 9.

11. The manufacturing method for an electrode plate according to claim 3, wherein, the thickness of the conductive glue (200) is 5-15 µm; further, the thickness of the conductive glue (200) is 8-10 ₁₁m.

## Patentansprüche

1. Verfahren zum Herstellen einer Elektrodenplatte, umfassend:
Erhalten von mindestens zwei aktiven Materialschichten (100);
Stapeln der mindestens zwei aktiven Materialschichten (100), wobei zwischen den Faserbildungsrichtungen der beiden benachbarten aktiven Materialschichten (100) ein Einschlusswinkel gebildet wird, und das Anwenden eines leitfähigen Klebstoffs (200) zwischen den beiden benachbarten aktiven Materialschichten (100);
Walzen der gestapelten mindestens zwei aktiven Materialschichten (100), um eine Elektrodenfolie zu erhalten; und
Kombinieren der Elektrodenfolie mit einem Stromkollektor, um die Elektrodenplatte zu erhalten;
wobei die Faserbildungsrichtungen der beiden benachbarten Aktivmaterialschichten (100) stehen senkrecht zueinander verlaufen;
der Schritt des Erzeugens von mindestens zwei aktiven Materialschichten (100) Folgendes umfasst:
Mischen und Rühren eines aktiven Materials, eines Leitmittels, von Polytetrafluorethylen und eines Additivs, um ein Mischpulver zu erhalten; und
Unterziehen des Mischpulvers in einer Walzenpresse einer Formgebung, um die aktive Materialschicht (100) zu erhalten;
Anordnen von zwei benachbarten aktiven Materialschichten (100) in einer Faserbildungsrichtung, wobei die Faserbildungsrichtungen der beiden benachbarten aktiven Materialschichten (100) jeweils mit den Längen- und Breitenrichtungen der aktiven Materialschichten (100) selbst übereinstimmen.

2. Herstellungsverfahren einer Elektrodenplatte nach Anspruch 1, wobei die Walzenoberflächentemperatur der Walzenpresse 40-240 °C beträgt.

3. Herstellungsverfahren einer Elektrodenplatte nach Anspruch 1, wobei vor dem Walzen der gestapelten mindestens zwei aktiven Materialschichten (100) die Dicke des leitfähigen Klebstoffs (200) 1-20 µm beträgt.

4. Herstellungsverfahren einer Elektrodenplatte nach Anspruch 1, wobei im Schritt des Walzens der gestapelten mindestens zwei aktiven Materialschichten (100) die Walzenoberflächentemperatur 100-130 °C beträgt und die Walzengeschwindigkeit 1-1,5 m/min beträgt.

5. Herstellungsverfahren einer Elektrodenplatte nach Anspruch 1, wobei das Herstellungsverfahren einer Elektrodenplatte vor dem Schritt des Kombinierens der Elektrodenfolie und des Stromkollektors ferner umfasst:
Unterziehen der durch Walzen erhaltene Elektrodenfolie einer Ausdünnungsbehandlung.

6. Herstellungsverfahren einer Elektrodenplatte nach Anspruch 5, wobei die Verdünnungsbehandlung durch Heißpressen durchgeführt wird.

7. Herstellungsverfahren einer Elektrodenplatte nach Anspruch 5, wobei vor der Ausdünnungsbehandlung die Dicke der Elektrodenfolie 150-165 µm beträgt, die Dicke der für eine Anodenplatte verwendeten Elektrodenfolie nach der Ausdünnungsbehandlung 65-75 µm beträgt und die Dicke der für eine Kathodenplatte verwendeten Elektrodenfolie nach der Ausdünnungsbehandlung 50-60 µm beträgt.

8. Herstellungsverfahren einer Elektrodenplatte nach Anspruch 1, wobei in dem Schritt des Kombinierens der Elektrodenfolie und des Stromkollektors eine Flachplatten-Heißpresse zum Kombinieren verwendet wird und die Oberflächentemperatur der Flachplatten-Heißpresse 185 °C beträgt und der Druck 2-6,7 MPa beträgt.

9. Elektrodenplatte, wobei die Elektrodenplatte durch das Herstellungsverfahren für eine Elektrodenplatte nach einem der Ansprüche 1-8 hergestellt wird.

10. Batterie, wobei die Batterie die Elektrodenplatte nach Anspruch 9 umfasst.

11. Herstellungsverfahren einer Elektrodenplatte nach Anspruch 3, wobei die Dicke des leitfähigen Klebstoffs (200) 5-15 µm beträgt, wobei die Dicke des leitfähigen Klebstoffs (200) ferner 8-10 µm beträgt.

## Revendications

1. Procédé de fabrication d'une plaque d'électrode, comprenant :
l'obtention d'au moins deux films de matière active (100) ;
l'empilement des au moins deux films de matière active (100), en formant un angle inclus entre les directions de fibrage des deux films de matière active (100) adjacents, et l'application d'une colle conductrice (200) entre les deux films de matière active (100) adjacents ;
le laminage des au moins deux films de matière active (100) empilés pour obtenir un film d'électrode ; et
la combinaison du film d'électrode et un collecteur de courant pour obtenir la plaque d'électrode ;
les directions de fibrage des deux films de matière active (100) adjacents sont perpendiculaires l'une à l'autre ;
l'étape d'obtention d'au moins deux films de matière active (100) comprend :
le mélange et l'agitation d'une matière active, d'un agent conducteur, de polytétrafluoroéthylène et d'un additif pour obtenir une poudre mélangée ; et
la soumission de la poudre mélangée à un façonnage dans une presse à rouleaux pour obtenir le film de matière active (100) ;
le placement de deux films de matière active (100) adjacents selon une direction de fibrage, les directions de fibrage des deux films de matière active (100) adjacents coïncidant respectivement avec les directions de la longueur et de la largeur des films de matière active (100) eux-mêmes.

2. Procédé de fabrication d'une plaque d'électrode selon la revendication 1, dans lequel la température de surface des rouleaux de la presse à rouleaux est de 40 à 240 °C.

3. Procédé de fabrication d'une plaque d'électrode selon la revendication 1, dans lequel, avant le laminage des au moins deux films de matière active (100) empilés, l'épaisseur de la colle conductrice (200) est de 1 à 20 µm.

4. Procédé de fabrication d'une plaque d'électrode selon la revendication 1, dans lequel, lors de l'étape de laminage des au moins deux films de matière active (100) empilés, la température de surface des rouleaux est de 100 à 130 °C, et la vitesse des rouleaux est de 1 à 1,5 m/min.

5. Procédé de fabrication d'une plaque d'électrode selon la revendication 1, dans lequel, avant l'étape de combinaison du film d'électrode et du collecteur de courant, le procédé de fabrication d'une plaque d'électrode comprend en outre :
la soumission du film d'électrode obtenu par laminage à un traitement d'amincissement.

6. Procédé de fabrication d'une plaque d'électrode selon la revendication 5, dans lequel le traitement d'amincissement est mis en œuvre par pressage à chaud.

7. Procédé de fabrication d'une plaque d'électrode selon la revendication 5, dans lequel, avant le traitement d'amincissement, l'épaisseur du film d'électrode est de 150 à 165 µm, l'épaisseur du film d'électrode utilisé pour une plaque d'anode est de 65 à 75 µm après le traitement d'amincissement, et l'épaisseur du film d'électrode utilisé pour une plaque de cathode après le traitement d'amincissement est de 50 à 60 µm.

8. Procédé de fabrication d'une plaque d'électrode selon la revendication 1, dans lequel, lors de l'étape de combinaison du film d'électrode et du collecteur de courant, une presse à chaud à plaque plate est utilisée pour la combinaison et la température de surface de la presse à chaud à plaque plate est de 185 °C et la pression est de 2 à 6,7 MPa.

9. Plaque d'électrode, dans laquelle la plaque d'électrode est produite par le procédé de fabrication d'une plaque d'électrode selon l'une quelconque des revendications 1 à 8.

10. Batterie, dans laquelle la batterie comprend la plaque d'électrode selon la revendication 9.

11. Procédé de fabrication d'une plaque d'électrode selon la revendication 3, dans lequel l'épaisseur de la colle conductrice (200) est de 5 à 15 µm, en outre l'épaisseur de la colle conductrice (200) est de 8 à 10 µm.
